# EUROPEAN PATENT SPECIFICATION

(11) **EP 2 055 760 B1**
(45) Date of publication and mention of the grant of the patent: **11.07.2018**
(21) Application number: 08253529.5
(22) Date of filing: 29.10.2008
(51) Int. Cl.: C10G 11/05, C10G 11/18, B01J 29/40, B01J 29/65, B01J 29/80

(54) **Fluid catalytic cracking process for maximisation of light olefins in operations of low severity**
Fluid-Catalytic-Cracking-Verfahren zur Maximierung von Leichtolefinen bei minderschwerem Betrieb
Procédé de craquage catalytique fluide pour la maximisation d'oléfines légères dans des opérations de faible gravité

(30) Priority: 29.10.2007 BR PI0704422
(43) Date of publication of application: 06.05.2009
(73) Proprietor: Petróleo Brasileiro S.A. - PETROBRAS, CEP 20035-900-Rio de Janeiro RJ (BR)
(72) Inventor: Bastiani, Raquel, Rio de Janeiro, RJ - CEP: 22.051-000. (BR); Lau, Lam Yiu, Rio de Janeiro, RJ - CEP: 22.280-040. (BR); Baptista, Claudia Maria de Lacerda Alvarenga, Rio de Janeiro, RJ - CEP: 22.511-280. (BR)
(74) Representative: J A Kemp

(56) References cited:
- EP-A- 0 355 928
- WO-A-2005/047429
- US-A1- 2002 003 103
- US-B1- 6 538 169
- US-B1- 6 867 341

## Description

### FIELD OF THE INVENTION

The present invention concerns the field of fluid catalytic cracking (FCC) processes and relates to the employment of additives based on zeolites having small pores, such as ferrierite (FER), in catalytic systems of FCC units wherein conditions of low severity are adopted with a view to increasing yields of LPG and light olefins whilst improving petrol stability. More particularly the present invention discloses a process for improving the production of LPG and propene in FCC units operating under conditions of maximisation of middle distillates having low aromaticity such that they may be incorporated into the diesel oil pool.

### BACKGROUND OF THE INVENTION

Fluid catalytic cracking (FCC) is carried out by contacting hydrocarbons in a tubular reaction zone or riser with a catalyst constituted by fine particulate material. Feedstocks most commonly subjected to the FCC process are, in general, streams from petroleum refineries from vacuum tower side cuts, denominated heavy vacuum gas oil (HVGO), or heavier streams from the bottom of atmospheric towers, denominated atmospheric residue (RAT), or mixtures of such streams. Said streams, having a density typically in the band from 8° API to 28° API, require subjection to a chemical process, such as the catalytic cracking process, fundamentally modifying the composition thereof, converting them into streams of lighter hydrocarbons having a greater economic value.

During the cracking reaction substantial quantities of coke, byproduct of the reactions, are deposited on the catalyst. Spent catalyst is directed to a regeneration zone wherein coke is burnt off the catalyst. Elimination of coke through combustion permits recovery of the activity of the catalyst and release of heat in sufficient quantity to provide the thermal requirements of the catalytic cracking reactions.

Since initial conception the FCC process has essentially been directed to the production of high-octane petrol, being also responsible for LPG production. The middle distillate (LCO) produced is essentially aromatic, which fact renders the incorporation thereof into the diesel pool difficult. However, current and future scenarios indicate a fall in consumption of petrol and an increase in demand for diesel oil.

Currently in Brazil 43% of the total of approximately two million barrels daily of refined petroleum are destined for production of diesel oil, and solely 17% for automotive petrol. In 2003 an imbalance between production and consumption of fuels led to a surplus of 46 thousand bpd of petrol and 103 thousand bpd of fuel oil, being exported, and a shortage of 72 thousand bpd of diesel (10% of demand), being imported.

In view of the increase in demand for high-quality middle distillates to the detriment of the petrol market, modifications have been introduced into the manner of operation of FCC units having the objective of increasing the production of middle distillates in this process. LCO, an FCC byproduct, corresponds to the distillation band lying typically between 220 °C and 340 °C and represents from 15% to 25% of the gross yield. Normally the LCO has a high concentration of aromatics, exceeding 80% of the total. In some situations it is advantageous to operate an FCC such as to maximise the LCO stream. In such cases it is desired to incorporate the LCO into the diesel oil pool.

However the high concentration of aromatic compounds confers thereon a very poor property of detonation in diesel engines (low cetane number) and high density. The high aromatics content also renders difficult attempts to improve the quality thereof through hydrotreatment. The majority of low-severity industrial operations in FCC units have as the objective thereof to increase the yield of LCO and improve the quality thereof such that through hydrotreatment (HDT) it may be incorporated into the diesel oil pool. In various technical events and articles possible modifications to the catalytic system and the variables of the process are discussed with the objective of achieving reduction in the severity of operation of FCC units with a view to increasing the yield of middle products and reducing the aromatics content. Among modifications to operational conditions are included a reduction in reaction temperature and a reduction in catalyst/feedstock ratio.

In the most common mode of operation for maximisation of middle products in the FCC process the reaction temperature is reduced (450 °C to 500 °C), circulation of catalyst is reduced, and a catalyst having low activity is utilised. All such steps achieve an increase in yield and improvement in quality (reduction of aromatics) of the LCO produced, but lead to a reduction in conversion with consequent reduction in the production of LPG and propene, being very important inputs for refineries and for generation of petrochemical products, in addition to a reduction in petrol octane rating. Important references in this matter are:
1) Peterman, R.W., *Distillate yield from the FCC: process and catalyst changes for maximization of LCO,* Catalysts Courier;
2) Advanced hydrotreating and hydrocracking technologies to produce ultra2-clean diesel fuel, Hydrocarbon Publishing Company, 2004;
*3)* Studies on maximizing diesel oil production from FCC, Fifth International Symposium on the Advances in Fluid Catalytic Cracking, 218th National Meeting, American Chemical Society, 1999;
4) New development boosts production of middle distillate from FCC, Oil and Gas Journal, August, 1970.

WO 2005/047429 discloses compositions for reduction of NOₓ generated during a catalytic cracking process, preferably a fluid catalytic cracking process. The compositions comprise a fluid catalytic cracking composition, preferably containing a Y-type zeolite and a particulate NOₓ reduction composition containing ferrierite zeolite particles.

Industrial application of additives based on zeolites having a high silica-alumina ratio, such as ZSM-5 (Zeolite Socony Mobil), commenced in 1983. Since then ZSM-5 has been employed with great success in conventional FCC operations as an active component of additives to increase the yield of light hydrocarbons such as LPG and light olefins, principally propene and isobutene, having a high value added. However such additives tend to reduce yield and quality of LCO in operations at low reaction temperatures as a function of cracking light compounds present. It has also been observed that use of such additives leads to a reduction in yield and increases the octane rating of petrol.

The literature relating to the matter may be examined in the publications:
1) Degnan F., Chitnis G.K. and Schipper P.H., History of ZSM-5 fluid cracking additive development at Mobil, Microporous and Mesoporous Materials, 35-36, 2000, 245-252;
2) Donnelly S.P., Mizzahi S., Sparrel P.T., Huss Jr., A., Schipper P.H. and Herbst J.A., How ZSM-5 works in FCC, Division of Petroleum Chemistry, ACS Meeting, August 30 - September 4, New Orleans, 1987;
3) Kishna A.S., Hsieh C.R., English A.R., Picoraro T.A., Kuehler C.W., Additives improve FCC process, Hydrocarbon Processing, Nov. 1991, 59-66.

Normally in industrial application of the additive ZSM-5 for maximisation of petrol appropriate operational conditions are adopted, that is to say reaction temperatures of the order of 540 °C. Under such conditions changes in yield and quality of LCO are practically not observed. Studies carried out at Petrobras' Research Centre (CENPES) have proved that in catalytic cracking processes operating at low severity, based on a reduction in reaction temperature, use of conventional commercial additives based on ZSM-5 promotes a reduction in the yield of LCO and an increase in aromaticity. Consequently the presence of such commercial additives has an effect contrary to that proposed in the present invention.

Some work published in the literature considers that the zeolite ferrierite (FER) offers a discreet contribution towards increased production of light olefins rising from the selectivity thereof in cracking molecules in the petrol band. For example the work by B.G. Anderson and coworkers in the publication An attempt to predict the optimum zeolite-based catalyst for selective cracking of naphtha-range hydrocarbons to light olefins, Journal of Molecular Catalysis A, Chemical 181, 2002, 291-301. However there are publications in the literature disclosing the use of FER for production of light olefins, not suggesting the use thereof exclusively in severe operations at temperatures exceeding 550 °C and high catalyst/feedstock ratio, that is to say typical FCC operations directed towards production of raw materials for the petrochemical industry. An example of such application is to be found in US Patent 6 867 341. There is no reference in the open literature describing or suggesting the use of FER in the catalytic cracking process having a simultaneous view to maximisation of production of middle distillates and of light olefins.

The present invention discloses an alternative solution for increasing production of light olefins without prejudice to production of middle distillates in catalytic cracking units operating under conditions of low severity, that is to say the use of the nonconventional zeolite, ferrierite (FER), partially replacing ZSM-5. According to this invention addition of the zeolite FER to the base catalyst directly or in additive form, mixed with ZSM-5, produces a catalytic system more efficient than catalytic systems found in the state of the art for increasing the yield of LPG and propene without prejudicing the yield and quality of LCO.

Ferrierite has pores smaller than those of zeolite ZSM-5 in a unidimensional structure having pore openings of 5.4 × 4.2 Angstroms and possessing two bidimensional channels of 5.6 × 5.3 Angstroms and 5.5 × 5.1 Angstroms.

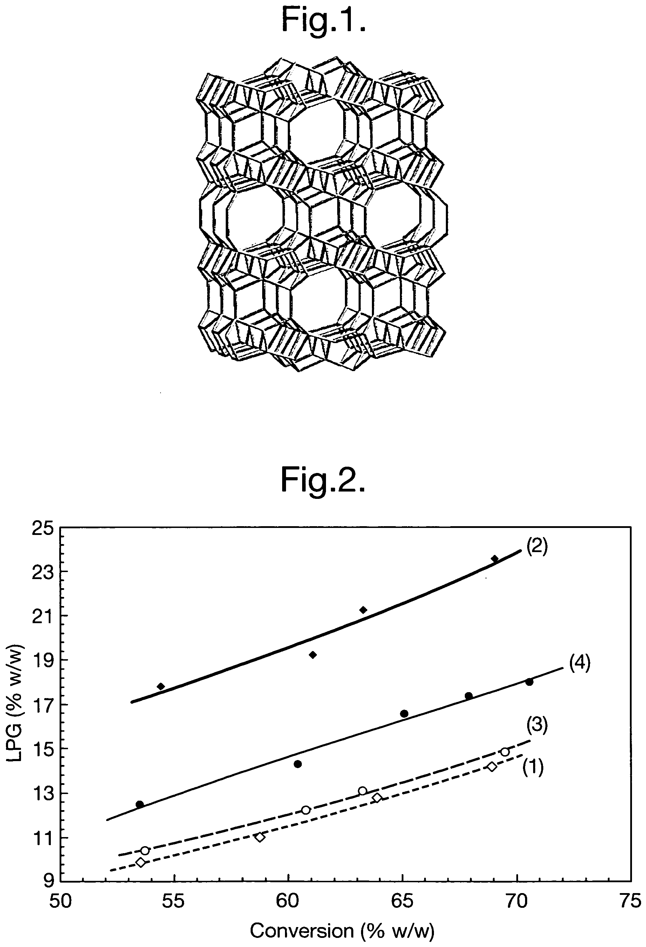

Figure 1 shows the crystalline structure of the zeolite FER. It may be acquired commercially or synthesised by methods already clearly revealed in the literature (US Patents 5 985 238; 4 088 739; 3 966 883). Zeolite ZSM-35 patented by Mobil (US Patent 4 016 245) may also be employed, having a structure similar to that of the zeolite FER. Various methods are described in the literature for incorporation of zeolites selective for olefins in different types of matrices forming microspheres suitable for use in FCC processes such as, for example, US Patent 5 286 369 (Grace), US Patent 5 456 821 and US Patent 5 888 378 (both belonging to Mobil). Said methods may be utilised to incorporate FER with or without the presence of ZSM-5.

Based on the present invention it is possible to achieve the benefits of the use of conventional additives based on ZSM-5 past eliminating the negative effects in relation to reduction in yield and quality of LCO. The zeolite FER, mixed with ZSM-5, contributes in a very significant manner to the formation of light olefins in low-severity operations without reducing the yield nor altering the quality of the LCO because, differing from zeolite ZSM-5, cracking of molecules in the LCO band does not occur as a function of the structure thereof. In addition, it also permits increasing the octane rating and the stability of the petrol produced.

### SUMMARY OF THE INVENTION

The present invention provides a fluid catalytic cracking (FCC) process utilising ferrierite, a zeolite differing from the ZSM-5 conventionally utilised to improve the quality and increase the quantity of middle distillates with greater yields of LPG and propene at moderate reaction temperatures, that is to say inferior to 510 °C.

The present invention provides a fluid catalytic cracking (FCC) process according to claim 1.

Ferrierite may be incorporated during the preparation of the FCC catalyst or added in the form of an additive. In both cases it may be employed pure or mixed with conventional zeolites. Said catalytic system comprises an FCC catalyst or a mixture of an FCC catalyst with an additive. Possessing a structure differing from zeolite ZSM-5, zeolite FER permits increasing production of LPG and propene without interfering with the yield and quality of middle distillates produced in low-severity operations, given that it does not bring about cracking of molecules in the LCO band and, in addition, renders possible an increase in octane rating and stability of the petrol obtained.

### DETAILED DESCRIPTION OF THE INVENTION

The present invention provides a fluid catalytic cracking (FCC) process for FCC units employing conditions of operation of low severity with a view to increasing production of LPG and light olefins and maximisation of middle distillates of low aromaticity, such that they may be incorporated into the diesel oil pool. The said process differs from processes found in the state of the art by virtue of employing an original catalytic system. Said catalyst is an FCC catalyst selective for light olefins, that is to say an FCC catalyst containing a zeolite selective for light olefins, which is a zeolite of the ZSM-5 type. Said additive comprises a zeolite having small pores, of the zeolite ferrierite (FER) type. Alternatively said catalyst may comprise an FCC catalyst containing in the composition thereof a zeolite having small pores, of the zeolite FER type, replacing partly the zeolite of ZSM-5 type. The percentage by weight of the FER type zeolite in the catalytic system in relation to the FCC catalyst lies within a band of values between 1% and 5%. The percentage by weight of zeolite of ZSM-5 type in the catalytic system, in relation to the FCC catalyst, lies within a band of values inferior to 2%, preferentially within a band of values inferior to 1%, more preferentially within a band of values inferior to 0.5%. Said catalytic system is utilised in FCC units under conditions of low severity, that is to say at temperatures inferior to 510 °C. Said catalytic system increases yields of LPG, propene and butene without loss of yield of LCO without the increased aromaticity observed in other catalytic systems employing conventional catalysts based on zeolite ZSM-5 utilised in the same operating conditions of low severity.

A method for preparation of an additive comprises the following stages:
1) preparation of a suspension of zeolite selective for production of light olefins, preferentially zeolites having a structure equivalent to the structure of the zeolite ferrierite (FER), such as zeolite ZSM-35, more preferentially the zeolite FER, pure or mixed with other zeolites selective for production of light olefins, for example zeolite ZSM-5;
2) preparation of a hydrosol of an inorganic oxide, typically of silica, alumina or silica-alumina;
3) mixing such hydrosol into such zeolite suspension;
4) drying such suspension in a spray drier.

The percentage by weight of zeolite FER in the catalytic system in relation to the FCC catalyst lies within a band of values between 1% and 5%. The percentage by weight of zeolite ZSM-5 in the catalytic system, in relation to the FCC catalyst, lies within a band of values inferior to 2%, preferentially inferior to 1%, more preferentially inferior to 0.5%.

In FCC units having the objective of maximisation of light olefins, the additive prepared by the method described mixed with an FCC catalyst to maximise LPG and propene offers better performance under operating conditions of low severity than additives prepared by other methods of the state of the art. Zeolite FER does not reduce the yield nor alter the quality of LCO rising from the architecture of the pores thereof which discriminate against cracking molecules of hydrocarbons in the LCO band.

### DESCRIPTION OF THE FIGURES

Figure 1 shows a drawing representing the structure of ferrierite. Figures 2, 3, 4 and 5 are graphs, obtained from the results of the example below, showing variations in yield of LPG (FIG. 2), Propene (FIG. 3), LCO (FIG. 4), and saturated iso-conversion compounds (FIG. 5), as a function of the conversions achieved by the samples studied in the microactivity tests carried out at 500 °C, having an iso-cat/oil ratio = 5: curve (1) 100% ecat MFCC-1; curve (2) 1% MFI; curve (3) 1% FER; curve (4) 5% FER.

EXAMPLE: The examples below are illustrative having the objective of demonstrating the intrinsic capacity of the zeolite FER to achieve the aforementioned performance without restricting the band of contents of FER and ZSM-5 to be applied. The zeolites were mixed with the catalyst and tested in an ACE unit in conformity with the standard test protocol of said unit. The reaction temperature adopted was 500 °C to simulate a low-severity operation, different catalyst/oil ratios being established based on adjustment of the time of injection of the sample.

The principal evaluation was of the effect of such zeolites on yield and quality of the LCO. The base catalyst employed was a commercial equilibrium catalyst, MFCC-1, having a formulation appropriate for the operation of maximisation of middle distillates. The respective zeolites were mixed pure with the base catalyst. Table 1 shows a summary of the experiments carried out. The feedstock utilised was a heavy vacuum gas oil. Tables 2 and 3 respectively show the principal properties of the feedstock and of the base catalyst employed.

| TABLE 1-TESTS CARRIED OUT IN ACE UNIT | | |
|---|---|---|
| Test | Type of zeolite and percentage added | TRX (°C) |
| A | 0% (base) | 500 |
| B | Ferrierite - 1 % | 500 |
| C | Ferrierite - 5% | 500 |
| D | ZSM-5 - 1 % | 500 |

| TABLE 2-FEEDSTOCK PROPERTIES | |
|---|---|
| Density at 20/4 °C | 0.9519 |
| ° API | 16.5 |
| Viscosity (ASTM D445-1) (cSt) | 107 |
| Temperature (°C) | 60 |
| Viscosity (ASTM D445-1) (cSt) | 35.06 |
| Temperature (°C) | 82.2 |
| Sulphur (ASTM D-5354) (ppm) | 7116 |
| Distillation (ASTM D-2887) | |
| IBP (°C) | 291.1 |
| T5% (°C) | 355.8 |
| T10% (°C) | 381.4 |
| T30% (°C) | 430.5 |
| T50% (°C) | 460.6 |
| T70% (°C) | 493.7 |
| T90% (°C) | 535.3 |
| FBP (°C) | 621.1 |

| TABLE 3-BASE CATALYST TEXTURAL AND CHEMICAL PROPERTIES | |
|---|---|
| MAT conversion (wt %) | 68 |
| BET area (m²/g) | 124 |
| Micropore volume (ml/g) | 0.007 |
| Mesopore area (m²/g) | 108 |
| Ni (ppm) | 1355 |
| V (ppm) | 1810 |
| P₂O₅ (ppm) | 5173 |

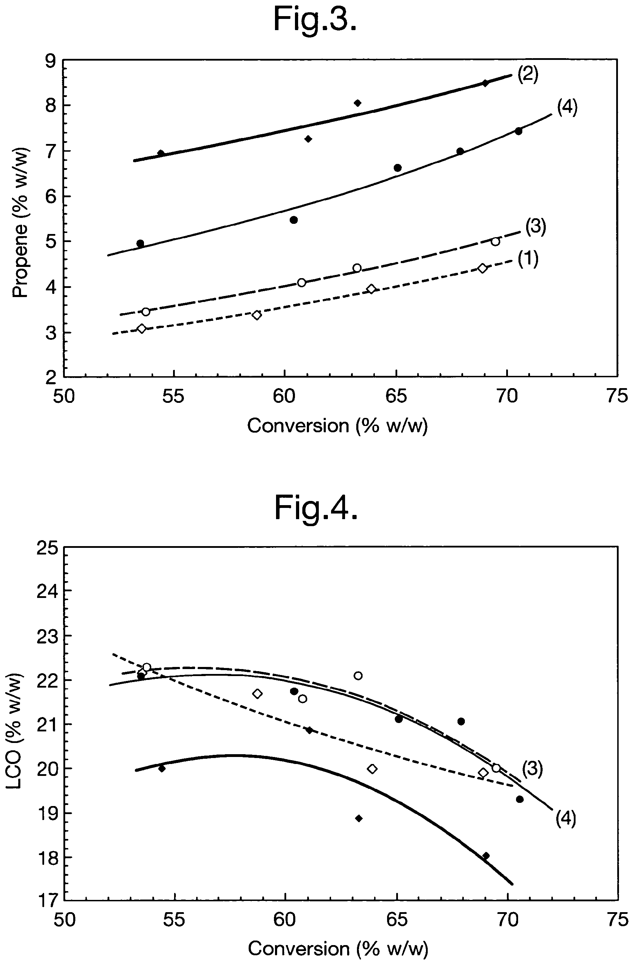

Figures 2, 3 and 4 demonstrate the excellent performance of FER in increasing yields of LPG and propene without reduction in yield of LCO. In spite of ZSM-5 showing high yields of LPG and propene, when compared with the base catalyst it is clearly observed that the yield of LCO is affected by the use of said zeolite. The addition of FER leads to an increase in LPG and propene. In particular, through mixing 5% FER with the base catalyst a considerable increase in the yield of LPG and propene is obtained. In both cases, 1% or 5% FER, the yield of LCO was unaffected.

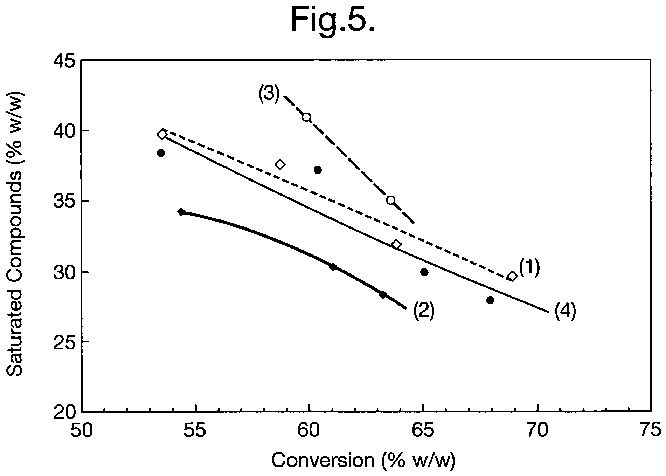

Figure 5 shows the influence of the additives on the content of saturated compounds in LCO. In the operation for maximisation of middle distillates the intention is to improve the quality and yield of LCO. In this manner the higher the content of saturates in the LCO the easier the incorporation thereof into the diesel pool through HDT will be.

The graph confirms that the additive based on ZSM-5 is not appropriate for maximisation of middle distillates because it reduces the saturates content of the LCO.

Table 4 shows a comparison between microactivity and iso-conversion tests. In addition to increasing the yield of light olefins the use of FER promotes a slight increase in the yield of LCO, maintaining the quality thereof.

| TABLE 4 - RESULTS OF MICROACTIVITY TESTS | | | | |
|---|---|---|---|---|
| CATALYST | 100% ECAT | 1% FER 99% ECAT | 5% FER 95% ECAT | 1% ZSM-5 99% ECAT |
| Conversion (% w/w) | 65 | 65 | 65 | 65 |
| CTO (w/w) | 6.15 | 6.04 | 5.97 | 6.06 |
| Coke (% w/w) | 9.97 | 9.77 | 9.88 | 10.23 |
| Fuel gas (% w/w) | 2.73 | 2.80 | 3.26 | 4.36 |
| Propene (% w/w) | 4.01 | 4.52 | 6.43 | 7.99 |
| LPG (% w/w) | 12.96 | 13.45 | 16.26 | 21.57 |
| Petrol (% w/w) | 39.44 | 38.98 | 35.60 | 28.84 |
| LCO (% w/w) | 20.25 | 21.29 | 21.22 | 19.27 |
| Saturates at iso-cat/oil=5 (% w/w) | 37.6 | 39.3 | 37.2 | 30.4 |

## Claims

1. Fluid catalytic cracking (FCC) process, which utilises operating conditions of low severity in FCC units to maximise quantity and quality of middle distillates and increase yields of LPG and light olefins; wherein said conditions of operation of low severity comprise a temperature below 510°C, **characterised in that** it utilises a catalytic system comprising two zeolites, wherein at least one of said zeolites has a pore size equivalent to the size of pores of zeolites of the ferrierite type, wherein at least one of said zeolites comprises a zeolite of ZSM-5 type, wherein said catalytic system contains a percentage by weight of zeolite of the ferrierite type of from 1% to 5%, based on the total weight of the catalyst, and a percentage by weight of zeolite of the ZSM-5 type of less than 2%, based on the total weight of the catalyst.

2. Process according to claim 1, **characterised in that** said catalytic system contains a percentage by weight of zeolite of the ZSM-5 type of less than 1%, based on the total weight of the catalyst.

3. Process according to claim 2, wherein said percentage by weight of zeolite of the ZSM-5 type is less than 0.5%, based on the total weight of the catalyst.

## Patentansprüche

1. Fluid Catalytic Cracking (FCC)-Prozess, der Betriebsbedingungen niedriger Härte in FCC-Einheiten nutzt, um eine Quantität und Qualität von Mitteldistillaten zu maximieren und Erträge von LPG und leichten Olefinen zu erhöhen; wobei die Betriebsbedingungen niedriger Härte eine Temperatur unter 510°C umfassen, **dadurch gekennzeichnet, dass** er ein katalytisches System nutzt, das zwei Zeolite umfasst, wobei mindestens eines der Zeolite eine Porengröße aufweist, die der Größe von Poren von Zeoliten des Ferrierittyps äquivalent sind, wobei mindestens eines der Zeolite ein Zeolit eines ZSM-5-Typs umfasst, wobei das katalytische System auf Basis des Gesamtgewichts des Katalysators einen Gewichtsprozentanteil von Zeolit des Ferrierittyps von 1 % bis 5 % enthält, und auf Basis des Gesamtgewichts des Katalysators einen Gewichtsprozentanteil von Zeolit des ZSM-5-Typs von weniger als 2 % enthält.

2. Prozess nach Anspruch 1, **dadurch gekennzeichnet, dass** das katalytische System auf Basis des Gesamtgewichts des Katalysators einen Gewichtsprozentanteil von Zeolit des ZSM-5-Typs von weniger als 1 % enthält.

3. Prozess nach Anspruch 2, wobei der Gewichtsprozentanteil von Zeolit des ZSM-5-Typs auf Basis des Gesamtgewichts des Katalysators weniger als 0,5 % beträgt.

## Revendications

1. Processus de craquage catalytique fluidisé (FCC), qui utilise des conditions de fonctionnement de faible sévérité dans des unités de FCC pour optimiser la quantité et la qualité des distillats moyens et augmenter les rendements de GPL et d'oléfines légères ; lesdites conditions de fonctionnement de faible sévérité comprenant une température inférieure à 510 °C, **caractérisé en ce qu'**il utilise un système catalytique comprenant deux zéolithes, au moins une desdites zéolithes présentant une taille de pore équivalente à la taille des pores de zéolithes de type ferriérite, au moins une desdites zéolithes comprenant une zéolithe de type ZSM-5, ledit système catalytique contenant un pourcentage en poids de zéolithe de type ferriérite de 1 % à 5 %, sur la base du poids total du catalyseur, et un pourcentage en poids de zéolithe de type ZSM-5 inférieur à 2 %, sur la base du poids total du catalyseur.

2. Processus selon la revendication 1, **caractérisé en ce que** ledit système catalytique contient un pourcentage en poids de zéolithe de type ZSM-5 inférieur à 1 %, sur la base du poids total du catalyseur.

3. Processus selon la revendication 2, dans lequel ledit pourcentage en poids de zéolithe de type ZSM-5 est inférieur à 0,5 %, sur la base du poids total du catalyseur.
